(19) Europäisches Patentamt / European Patent Office / Office européen des brevets

(11) **EP 4 632 250 B1**

(12) **EUROPEAN PATENT SPECIFICATION**

(45) Date of publication and mention
of the grant of the patent:
**01.07.2026 Bulletin 2026/27**

(51) International Patent Classification (IPC):
***F16H 57/01*** *(2012.01)*

(52) Cooperative Patent Classification (CPC):
**F16H 57/01;** F16H 55/0806; F16H 2057/012

(21) Application number: **24305589.4**

(22) Date of filing: **11.04.2024**

(54) **METHOD FOR MEASURING THE WEAR OF AN INVOLUTE SPLINE OF A HUB DRIVE WITH PLANETARY GEARBOX**

VERFAHREN ZUR MESSUNG DES VERSCHLEISSES EINER EVOLVENTEN VERZAHNUNG EINES NABENANTRIEBS MIT PLANETENGETRIEBE

PROCÉDÉ DE MESURE DE L'USURE D'UNE CANNELURE INVOLUTÉE D'UN ENTRAÎNEMENT À MOYEU DOTÉ D'UNE BOÎTE DE VITESSES PLANÉTAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**15.10.2025 Bulletin 2025/42**

(73) Proprietor: **ALSTOM Holdings
93400 Saint-Ouen-sur-Seine (FR)**

(72) Inventor: **CEPAK, Werner
1150 WIEN (AT)**

(74) Representative: **Plasseraud IP
104 Rue de Richelieu
CS92104
75080 Paris Cedex 02 (FR)**

(56) References cited:
CN-A- 107 389 484    DE-B3- 102021 125 112
US-A1- 2015 177 098    US-A1- 2023 313 875

**Description**

The present invention relates to a method for measuring the wear of an involute spline of a hub drive with planetary gearbox.

Compact hub drives are usually built with a planetary gearbox and a motor such as an asynchronous motor or a permanent magnet motor. Transfer of torque from the rotor of the motor to the sun gear of the planetary gearbox needs compact and flexible solution such as given by involute spline.

The flexibility is needed due to small movements between rotor and sun gear which include the risk of wear at the contact of involute spline. The wear is acceptable as long as the strength of involute spline is not reduced. Without detailed information on the increase of wear over time and/or mileage, high margin of wear need to be kept.

Up to now, the wear can only be measured during visual inspection of the affected parts. The inspection of the parts is costly and time consuming as the complete drive needs to be disassembled from the vehicle and needs disassembly of the drive itself until visibility to the involute spline is given.

Wear of involute spline may lead to stopping failure due to critical operation condition of the motor and evacuation of passengers some meters above street. Easy methodology to measure the wear without disassembly of drives is thus required. The prior art comprises the following documents: US 2023/313875 A1 which discloses a method for monitoring a gear wear in an electric power train ; DE 102021125112 B3 which discloses an electric axle drive train, a control unit, and a computer programme product.

The invention is intended to provide a method for measuring wear of the involute spline, with low cost and time consumption.

To this end, the invention relates to a method for measuring wear of an involute spline in a hub drive comprising a planetary gearbox, wherein the hub drive comprises a stator and a rotor, and the planetary gearbox comprises a ring gear, a sun gear and planet gears, the sun gear being connected to the rotor via teeth shaped with involute spline, characterized in that the method comprises:

- a step of application of a mechanical brake to fix the sun gear in position,
- a step of application of an alternating torque on the rotor,
- a step of measuring an angular displacement of the rotor versus the stator, and
- a step of translating the measured angular displacement of the rotor into a wear value of the involute spline.

The invention allows a precise prediction of the wear, by using existing equipment and existing data provided by the already existing software. This method does not need any additional sensor than already equipped.

It should be noticed that the method is not continuous measurement but planned measurements in regular intervals.

A method according to the invention may comprise any of the following features, taken alone or in any possible combination.

- The applied torque has an amplitude comprised between 5 and 10 Nm.
- The applied torque has a period inferior to 2 Hz.
- The angular displacement is measured by a resolver, and the measured angular displacement is translated into a wear value with a linear function.
- The linear function is: $B = \alpha_{resolver} * \dfrac{d}{2*R1}$ , where:

  > B is the wear value,
  > $\alpha_{resolver}$ is the angle measured by the resolver,
  > R1 is the ratio between the angle of the resolver $\alpha_{resolver}$ and the corresponding angle of the rotor $\alpha_{rotor}$, $\alpha_{resolver} = R1 * \alpha_{rotor} \, [rad]$, d is the smallest diameter at the involute spline of the rotor.

Several features and advantages of the invention will be enlightened in the following disclosure, only given as an example and made in reference to attached Figures, in which:

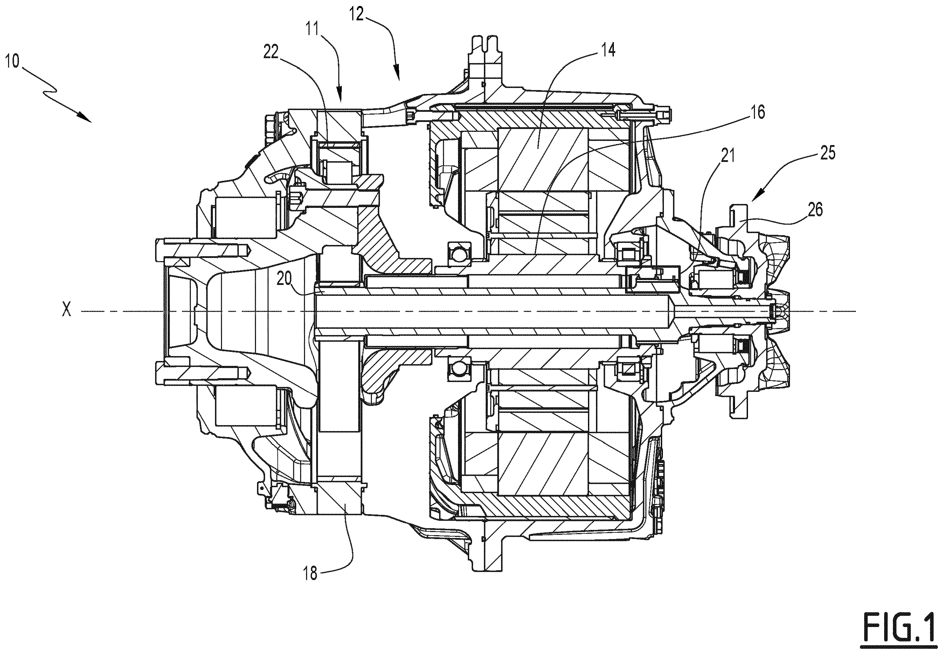

- Figure 1 shows a hub drive in which the method of the invention is implemented
- Figure 2 shows the inter-engaged teeth of a sun gear and a rotor of the hub drive of Figure 1, and
- Figure 3 shows an example of measured angular displacement of the rotor when a torque is applied.

The invention related to a method for measuring the wear of an involute spline of a hub drive 10 with planetary gearbox 11.

The hub drive 10 comprises a motor 12, having a stator 14 and a rotor 16. The rotor 16 is rotatable around a longitudinal axis X.

The planetary gearbox 11 comprises a ring gear 18 with internal teeth, a sun gear 20 with external teeth, and planet gears 22 having first teeth engaged with the internal teeth of the ring gear 18 and second teeth engaged with the external teeth of the sun gear 20.

The sun gear 20 extends along the longitudinal axis X, and is rotatable around this longitudinal axis X.

The sun gear 20 is arranged inside a housing defined by the rotor 16. In other words, the rotor 16 is arranged around the sun gear 20.

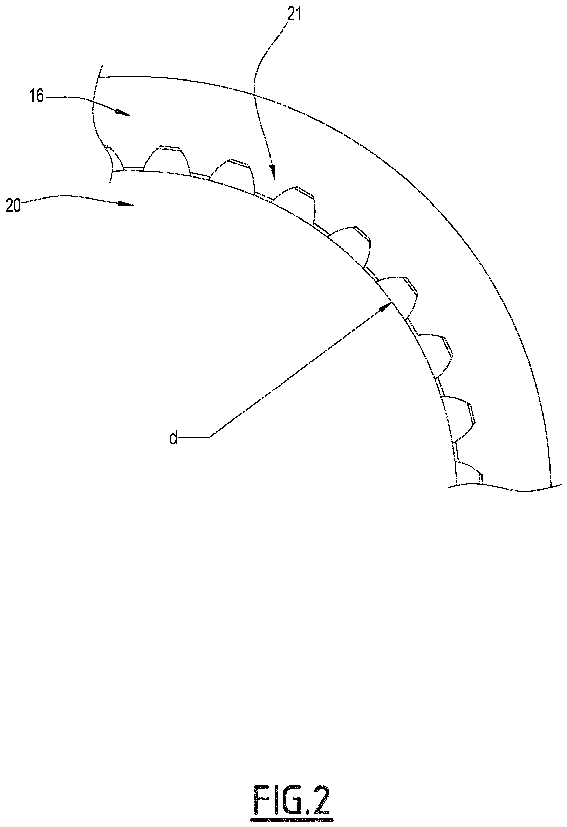

The sun gear 20 is connected to the rotor 16 via engaged teeth 21 shaped with involute spline, in a known manner. As seen on Figure 2, the involute spline 21 is needed to transfer the torque from rotor 16 (outer part) to the sun gear 20 (inner part).

The invention proposes a method for measuring the wear of the involute spline 21.

The method first comprises a step of immobilizing the sun gear 20 in position. This immobilization is implemented by using a mechanical brake 25. Such a mechanical brake is preferably a brake already existing in a known hub drive. For exemple, the mechanical brake 25 comprises a brake disc 26 fitted onto the sun gear 20, and a brake caliper (not shown) fitted to the bogie frame as the hub drive itself, in order to minimize elasticity between the sun gear 20 and the hub drive in case of braking.

The method then comprises the application of a small alternating torque on the motor 12 with very low frequency, i.e. a frequency inferior to 2 Hz.

The amplitude of the torque should be sufficient to move the rotor 16, and not too high to avoid elastic deformations. For example, the torque amplitude is between 5 Nm and 10 Nm.

The torque is for example applied by a converter of the motor 12.

When the torque is applied, the rotor 16 is subject to an angular displacement versus the stator 14, which is limited by the teeth engagement 21 with the sun gear 20, which is immobilized in position by the brake 25.

The method then comprises the measurement of an angular displacement of the rotor 16 versus the stator 14, preferentially via a resolver (i.e. a transducer that transforms angular displacement into electrical magnitude).

The angular displacement depends on the space between the teeth of the rotor and the teeth of the sun gear. Thus, the amplitude of this angular displacement varies with the wear of the involute spline 21.

It thus appears that the method allows measuring the wear of the involute spline 21, by translating the angular displacement into a wear value.

Regular measurement of the wear gives several benefits. In particular, it allows utilizing the involute spline 21 until maximum of the acceptable wear is reached. The method of the invention needs low efforts and time, with an analysis made within few minutes.

The high utilization of involute spline 21 and the quick analysis allows high availability of the vehicles by running them until maximum wear without any visual inspection and without any disassembly.

The continuous measurement of the wear allows identification of loading conditions impacting the wear and helps to improve the design.

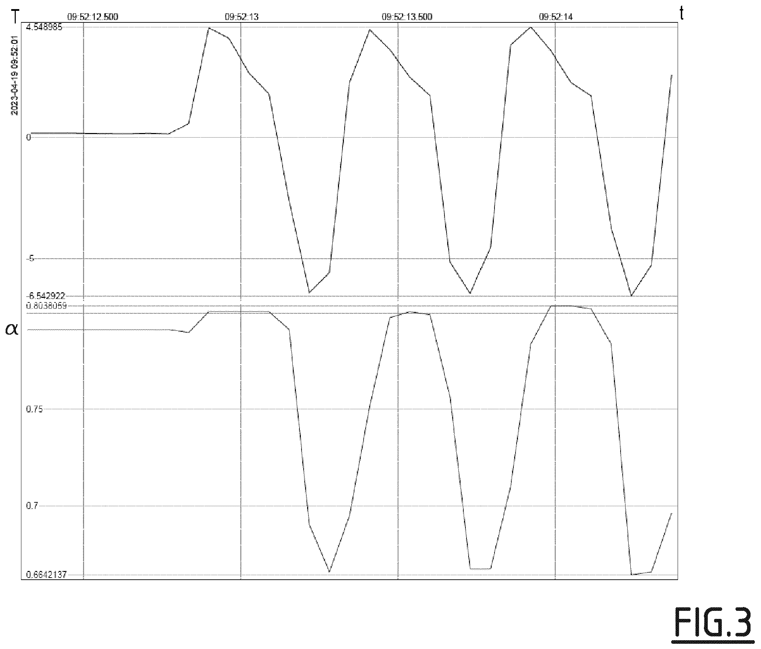

The existing software of the vehicle can be easily used to measure the wear via the angular displacement of the rotor 16 by application of low torque - an example derived with alternating torque is shown in Figure 3.

Figure 3 shows a first graph, with time t (in seconds) in abscissa and Torque amplitude T (In Nm) applied on motor in ordinate; and a second graph, with time t (in seconds) in abscissa, and angular displacement α (in radiant) of rotor versus stator in ordinate.

In this example, the torque amplitude is defined between about 5 Nm to about 10 Nm. This value is chosen to ensure that the rotor is moving versus the sun gear, and not because of elastic deformation occurring in the suspension elements. The torque increase is limited to avoid dynamic effects within the hub drive.

In this example, the resolver shows 360° angle every 90° turn of the rotor. Thus, in this specific case, the angle ($\alpha_{resolver}$) measured with the resolver is 4 times the angle of the rotor ($\alpha_{rotor}$):

$$\alpha_{resolver} = 4 * \alpha_{rotor} \ [rad]$$

The angle of 360° corresponds to 2 Pi measured in radiant. For one full rotation of rotor (360°) the measured angle of resolver follows: $\alpha_{resolver360°} = 4 * 2 * \pi = 8 * \pi \ [rad]$

In the example, the smallest diameter d at the involute spline is 80 mm. The circumference at 80 mm is 80 times pi (mm). The circumference $C_{(rotor)}$ of the rotor at diameter 80 mm is thus given by:

$$C_{rotor} = d * \pi = 80 * \pi \ [mm]$$

The correlation of circumference at involute spline to signal resolver is given by:

$$\frac{C_{rotor}}{\alpha_{resolver360°}} = \frac{80 * \pi}{8 * \pi} = 10$$

Thus, the backlash B at diameter 80 mm can be calculated out of the measured signal resolver by the formula:

$$B = \alpha_{resolver} * 10$$

That means that resolver peak to peak of 1 radiant corresponds to 10 mm displacement of rotor at the involute spline.

On the shown example, the maximum peak to peak of the resolver signal is about 0.1396 radiant (0.8038059-0.6642137), thus corresponding to a displacement of rotor of about 1.4 mm.

This value should be compared to the basis clearance of the rotor, to get the wear value.

Preferentially, the wear value is compared with a predefined value, in order to decide that a maintenance should occur when the wear value is higher than the predefined value.

It should be noticed that the values above are given as an example. A more general formula is defined hereafter.

First, we define a first ratio R1 which is the ratio between the angle of the resolver ($\alpha_{resolver}$) corresponding to the angle of the rotor, so $\alpha_{resolver} = R1 * \alpha_{rotor}$ [rad]. In the example above, R1=4.

The angle of 360° corresponds to 2 Pi measured in radiant. For one full rotation of rotor (360°) the measured angle of resolver follows: $\alpha_{resolver360°} = 2 * R1 * \pi$ [rad]

Then, the smallest diameter at the involute spline is considered. This diameter is noted "d" in the formula of the circumference of the rotor at this diameter: $C_{rotor} = d * \pi$ [mm]. In the example above, the diameter is 80 mm.

The correlation of circumference at involute spline to signal resolver is given by:

$$\frac{C_{rotor}}{\alpha_{resolver360°}} = \frac{d * \pi}{2 * R1 * \pi} = \frac{d}{2 * R1}$$

Thus, the backlash B at diameter d, which corresponds to the wear value, can be calculated out of the measured signal resolver by the formula:

$$B = \alpha_{resolver} * \frac{d}{2 * R1}$$

Thus, resolver peak to peak of 1 radiant corresponds to $\frac{d}{2*R1}$ displacement of rotor at the involute spline, which corresponds to the wear at the involute spline.

## Claims

1. A method for measuring wear of an involute spline in a hub drive (10) comprising a planetary gearbox (11), wherein the hub drive (10) comprises a stator (14) and a rotor (16), and the planetary gearbox (11) comprises a ring gear (18), a sun gear (20) and planet gears (22), the sun gear (20) being connected to the rotor (16) via teeth (21) shaped with involute spline, **characterized in that** the method comprises:

   - a step of application of a mechanical brake to fix the sun gear (20) in position,
   - a step of application of an alternating torque on the rotor (16),
   - a step of measuring an angular displacement of the rotor (16) versus the stator (14), and
   - a step of translating the measured angular displacement of the rotor (16) into a wear value of the involute spline.

2. The method of claim 1, wherein the applied torque has an amplitude comprised between 5 and 10 Nm.

3. The method of claim 1 or 2, wherein the applied torque has a period inferior to 2 Hz.

4. The method of any of preceding claims, wherein the angular displacement is measured by a resolver, and the measured angular displacement is translated into a wear value with a linear function.

5. The method of claim 4, wherein the linear function is:

$$B = \alpha_{resolver} * \frac{d}{2 * R1} \quad , \quad \text{where:}$$

   B is the wear value,
   $\alpha_{resolver}$ is the angle measured by the resolver,
   R1 is the ratio between the angle of the resolver $\alpha_{resolver}$ and the corresponding angle of the rotor $\alpha_{rotor}$, $\alpha_{resolver} = R1 * \alpha_{rotor}$ [rad], d is the smallest diameter at the involute spline of the rotor.

## Patentansprüche

1. Verfahren zum Messen einer Abnutzung eines Evolventenprofils in einem Nabenantrieb (10), umfassend ein Planetengetriebe (11), wobei der Nabenantrieb (10) einen Stator (14) und einen Rotor (16) umfasst, und wobei das Planetengetriebe (11) ein Tellerrad (18), ein Sonnenrad (20) und Planetenräder (22) umfasst, wobei das Sonnenrad (20) mit dem Rotor (16) mittels Zähnen (21) verbunden ist, welche mit einem Evolventenprofil geformt sind, **dadurch gekennzeichnet, dass** das Verfahren umfasst:

   - einen Schritt eines Anwendens einer mechanischen Bremse, um das Sonnenrad (20) in Position zu halten,
   - einen Schritt eines Anwendens eines Wechseldrehmoments auf den Rotor (16),
   - einen Schritt eines Messens einer Winkelverschiebung des Rotors (16) gegenüber dem Stator (14), und
   - einen Schritt eines Übertragens der gemessenen Winkelverschiebung des Rotors (16) in einen Abnutzungswert des Evolventenprofils.

2. Verfahren nach Anspruch 1, wobei das angewandte Drehmoment eine Amplitude aufweist, welche zwischen 5 und 10 Nm umfasst ist.

3. Verfahren nach Anspruch 1 oder 2, wobei das angewandte Drehmoment eine Zeitdauer aufweist, welche 2 Hz untergeordnet ist.

4. Verfahren nach einem der vorhergehenden Ansprüche, wobei die Winkelverschiebung durch einen Drehmelder gemessen wird, und wobei die gemessene Winkelverschiebung mit einer linearen Funktion in einen Abnutzungswert übertragen wird.

**5.** Verfahren nach Anspruch 4, wobei die lineare Funktion lautet: $B = \alpha_{Drehmelder} * \dfrac{d}{2*R1}$ , wobei:

B der Abnutzungswert ist,
$\alpha_{Drehmelder}$ der Winkel ist, welche von dem Drehmelder gemessen wird,
R1 das Verhältnis zwischen dem Winkel des Drehmelders $\alpha_{Drehmelder}$ und dem entsprechenden Winkel des Rotors $\alpha_{Rotor}$ ist, wobei $\alpha_{Drehmelder} = R1 * \alpha_{Rotor}[rad]$ ist, wobei d der kleinste Durchmesser an dem Evolventenprofil des Rotors ist.

## Revendications

**1.** Un procédé pour mesurer l'usure d'une cannelure en développante dans un entraînement de moyeu (10) comprenant un réducteur planétaire (11), dans lequel l'entraînement de moyeu (10) comprend un stator (14) et un rotor (16), et le réducteur planétaire (11) comprend une couronne (18), une roue solaire (20) et des satellites (22), la roue solaire (20) étant reliée au rotor (16) par des dents (21) formées avec une cannelure en développante, **caractérisé en ce que** le procédé comprend :

- une étape d'application d'un frein mécanique pour fixer la roue solaire (20) en position,
- une étape d'application d'un couple alternatif sur le rotor (16),
- une étape de mesure d'un déplacement angulaire du rotor (16) par rapport au stator (14), et
- une étape de traduction du déplacement angulaire mesuré du rotor (16) en une valeur d'usure de la cannelure en développante.

**2.** Le procédé selon la revendication 1, dans lequel le couple appliqué présente une amplitude comprise entre 5 et 10 Nm.

**3.** Le procédé selon la revendication 1 ou 2, dans lequel le couple appliqué présente une période inférieure à 2 Hz.

**4.** Le procédé selon l'une quelconque des revendications précédentes, dans lequel le déplacement angulaire est mesuré par un résolveur, et le déplacement angulaire mesuré est traduit en une valeur d'usure avec une fonction linéaire.

**5.** Le procédé selon la revendication 4, dans lequel la fonction linéaire est : $B = \alpha_{résolveur} * \dfrac{d}{2*R1}$ , où :

B est la valeur d'usure,

$\alpha_{résolveur}$ est l'angle mesuré par le résolveur,
R1 est le rapport entre l'angle du résolveur $\alpha_{résolveur}$ et l'angle correspondant du rotor $\alpha_{rotor}$, $\alpha_{résolveur} = R1 * \alpha_{rotor}$ [rad], d est le plus petit diamètre au niveau de la cannelure en développante du rotor.

FIG.1

21

16

20

d

## FIG.2

FIG.3

**EP 4 632 250 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2023313875 A1

- DE 102021125112 B3